Europäisches Patentamt

European Patent Office

Office européen des brevets

(19)

(11) Publication number: **0 130 757**
**A2**

## (12) EUROPEAN PATENT APPLICATION

(21) Application number: **84304259.9**

(51) Int. Cl.⁴: **F 24 J 1/02**

(22) Date of filing: **22.06.84**

(30) Priority: **30.06.83 IL 69119**

(43) Date of publication of application: **09.01.85**
**Bulletin 85/2**

(84) Designated Contracting States: **AT BE CH DE FR GB IT
LI LU NL SE**

(71) Applicant: **The State of Israel Ministry of Defence
Military Industries, 64 Sderoth Bialik P.O. Box 1044,
Ramat Hasharon (IL)**

(72) Inventor: **Kertes, Agnes, 28, Shnir Street, Ramat
Hasharon (IL)**
Inventor: **Kiecner, Adrian, 62, Ir Shemesh Street, Tel Aviv
(IL)**

(74) Representative: **Miller, Joseph et al, J. MILLER & CO.
Lincoln House 296-302 High Holborn, London WC1V 7JH
(GB)**

(54) **Liquid heating device.**

(57) A heating device for producing heat substantially without
noise, flame, gas or smoke. Preselected quantities of first and
second matters are contained in a housing. The first matter is
adapted to develop heat when being primed by the second mat-
ter and the latter is being primed by primer means extending
parallel into the housing. The primer means are actuated manu-
ally.

EP 0 130 757 A2

- 1 -

## LIQUID HEATING DEVICE

The present invention generally relates to a heat producing device and, more particularly, to a device for heating liquid without production of fire, noise, smoke or the like.

There are a number of situations in which conventional techniques for heating liquid, e.g. water, cannot be used. For example, soldiers, on a front line, are forbidden from lighting fires, creating noise, or producing smoke or the like, which may be seen, heard or noticed by an enemy. Yet under cold weather conditions it is very desirable to enable the soldiers to have access to warm liquids, be it water, soup or the like. The ability to heat such liquids, hereafter simply referred to as water, without fire, noise, smoke production of the like is also sought by hikers

0130757

- 2 -

in remote locations under cold weather conditions. Typically, hikers in such locations are forbidden from lighting fires to prevent such fires from spreading accidentally. Also the production of smoke or the like are often not permitted in order to protect the environment as well as not to attract dangerous wild life, e.g. bears or the like. A need therefore exists for a simple device which is capable of producing a reasonably large amount of heat to heat water without the heating process being observable to outsiders in any way and without contaminating and/or endangering the environment.

This need is totally satisfied by the novel device of the present invention. In one embodiment the invention comprises:

a separate housing adapted to be at least partially immersed in a liquid to be heated, in a liquid container, the housing being at least liquid proof and of thermally conductive matter;

a preselected quantity of first matter having pyrotechnic properties in said housing;

a layer of a second matter in said housing adapted to undergo an exothermal reaction to heat said first matter sufficiently to cause it to undergo a reaction resulting in the release of a known amount of heat through said housing; and

- 3 -

activating means partially in said housing and partially exterior thereto, the latter being manually activatable for igniting said second matter to cause it to undergo said exothermal reaction and heat said first matter.

In one embodiment, particularly designed for heating water in a conventional canteen, typically attached to a soldier's or a hider's belt, the device's housing is cylindrically shaped and is supported within the canteen. A canteen cap surrounds the housing hear its top, so as to suspend the housing in the water. The cap is of the conventional type except for one additional feature. It includes a plurality of holes. When tightly threaded to the canteen the latter is water tight. However, when the cap is slightly loosened, the holes provide an air path for gases, e.g. vapor of boiling water to escape out of the canteen. Extending above the canteen cap is a portion of a hand-grenade type primer with its safety pin. It is the primer, upon being triggered, that ignites the matter in the housing which results the heat, necessary to heat the water. In other embodiments other arrangements may be employed to initiate the reactions which are necessary to produce the heat.

0130757

- 4 -

The novel features of the invention are set forth with particularity in the appended claims. The invention will best be understood from the following description when read in conjunction with the accompanying drawings.

Figure 1 is a cross-sectional view of the invention when used to heat water in a canteen;

Figure 2 is a front view of another embodiment of the invention; and

Figure 3 is a cross-sectional view of yet another arrangement incorporating the invention.

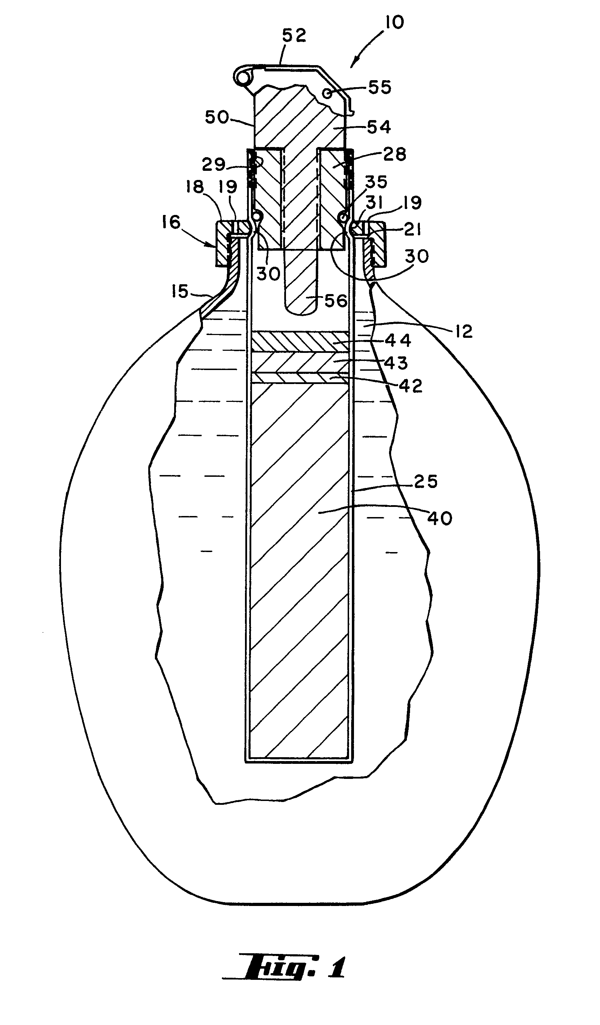

Attention is first directed to Fig. 1 in connection with which a specific embodiment of the invention will be described. In this specific embodiment the novel heating device, generally designated by 10, is used to heat water or other liquid 12 in a canteen 15, of the type carried by soldiers or hikers by suspending it from a belt or strap. The typical canteen has a cap 16, threadable thereto. Whereas in a conventional canteen the cap top 18 is not perforated, when used with the present invention the cap's top has a plurality of holes 19. Briefly, the holes are formed so that when the cap is slightly loosened, the holes provide an air path from the canteen interior to the outside thereof. However, when the cap is tightened to close the canteen the holes abut against the upper lip 21 of the canteen, thus preventing water to leak therethrough.

The novel device 10 partially extends into the canteen through the cap top, while a portion thereof remains above the cap 16 for purposes to be explained. The device 10 consists of a housing 25 in the shape of a hollow cylinder. It is formed of a metal, e.g. S.S. of sufficient thickness and strength to withstand any pressure that may be formed in the housing as a result of the reactions provided therein. Primarily it is thick enough to securely contain any volatile matter from escaping from the housing interior. The housing is formed of a metal with high heat conductivity in order to optimize the transfer of heat from the housing interior to the water, which is in contact with its outer surface.

The housing bottom end in the canteen is closed, while its opposite end, outside the canteen is open except when effectively sealed by a housing top 28 which threadably engages housing threads 29. In order to facilitate the coupling of the device 10 to the canteen cap 16 the former is slightly indented inwardly as designated by 30, while the opening 31 in cap 16, which is typically made of plastic, is smaller than the general outside diameter (O.D.) of the housing 25 but on the order of the housing O.D. at the indentation 30. Thus the cap 16 can be pushed until the cap opening 31 is at the indentation 30. The housing top is shaped at its lower end to pass by the reduced inside diameter (ID) of the housing. Also a recess is formed therein so that when the top 28 is fully threaded into the housing, a rubber seal 35, e.g. an O-ring, is pressed between the top and the housing 10 at the inward indentation of the latter. Seal 35 serves as a gas seal to prevent any reaction gases from escaping out of the housing through any thread clearance between the housing and its top 28.

As shown in Fig. 1, contained in the housing 25 are several layers of different types of matter. Typically, when each is introduced into the housing it is in powder form which is then compacted to enable the next compacted powder layer to be formed thereon. The layers include a layer of matter, most inwardly placed in the housing, and designated by 40. It is layer or matter 40 which when activated, as will be explained hereafter, due to its pyrotechnic properties undergoes a reaction. As a result and based on the amount of matter 40 the desired amount of heat is released by this matter. Thus, heat is transferred through the housing 25 to the water 12. Examples of matter 40, as well as those above it, will be given herebelow.

After matter 40 is introduced, several layers of matter, such as those designated by 42, 43 and 44 are successively introduced into the housing, each in powder form which is then compressed. These layers serve to initiate the reaction of matter 40 once they are activated, as will be described.

The successive activation of layers 42-44, with layer 44 being activated first, is provided by a priming mechanism or primer 50 which partially extends into housing 25 through the top 28, while the rest of the mechanism 50 extends above the housing top to enable the user of the device 10 to activate it. In one embodiment, which was actually reduced to practice, the primer 50 consisted of a primer of the type used in hand grenades. As is known, in such a primer, a lever 52 is secured to the mechanism body 54 by a safety pin with a ring, designated in Fig. 1 by 55. When the safety pin is removed by pulling on the ring, the lever 52, which is spring biased, is released, thus activating the primer.

The operation of a hand grenade type primer is well known and therefore will not be described in further detail. When used in the present invention the primer end 56, which in a conventional hand grenade causes the explosives to be activated, activates the top layer 44. The latter undergoes an exothermal reaction which in turn heats up the next layer 43 which is also of the exothermal reaction type. It in turn, due to its reaction, heats up layer 42 which was incorporated in one embodiment and serves as a binding layer between layer 43 and layer 40 to optimize the transfer of heat to the latter to cause it to undergo its reaction and thus release the desired heat.

From the foregoing, it should thus be appreciated that the actual heat is provided due to the reaction of the pyrotechnic matter 40. As to layers 43 and 44, and when used, also binder layer 42, which exhibit exothermal properties, once activated by primer 50, serve as ignition layers to provide sufficient heat to cause layer 40 to undergo its reaction. As to layer 42, when it is used, serves as a binding layer to merely enhance the transfer of heat from the ignition layer 43 to the heat-producing layer 40. Layers 42-44 can be viewed as ignition layers or ignition matter means for layer 40. If desired, layer 42 may be eliminated. Also, instead of two ignition layers 43 and 44, if desired, a single ignition layer or matter with pyrotechnic properties may be used. In any event, it is primer 50, which is manually activated, such as by extracting pin 55, by the device user, which activates the ignition layer or layers 44, 43 and 42 in that order.

In one particular embodiment layer or matter 40 consisted of a compacted dry powdered mixture of $CaSi_2$ and $Fe_2O_3$ in a ratio in the range of 60:40 to 40:60 by weight. When activated it underwent a reaction, accompanied by the release of heat. The $CaSi_2$ served as the fuel, while the $Fe_2O_3$ served as the oxygen source.

As to the top ignition layer 44 it consisted of $B/BaCrO_4$ in the ratio of (5-20):(95-80) while the itnition layer 43 consisted of a Zr/Ni type III mixture which when activated by the reaction heat from layer 44 heats layer 40, through layer 42 when the latter is used. In one embodiment layer 42 consisted primarily of the same matter as layer 40 plus a small amount of polyvinyl alcohol acetate (PVAA).

The exothermal reactions of the ignition layers as well as the reaction of the main heat-producing layer 40 produce a minimal amount of gases and thus the amount of gases can be ignored as being insignificant. However, to avoid any gases from escaping out of the housing, seal 35 is incorporated. The reactions convert the various materials which are originally in compacted powder form into hardened layers. The particular materials described above are non-toxic, a desirable characteristic to insure the absence of toxic contamination of the heated water in case of housing failure, as well as to insure the absence of escaping toxic fumes in the event of seal failure.

In the embodiment reduced to practice, the housing 25 was formed of a hollow cylinder of SS 304, 19.6 cm long with a wall thickness of 0.08 cm and an OD of 25.4 mm. The amounts by weight of layers 40 and 42-44 were 110 gm, 5 gm, 1 gm and 1 gm, respectively. With this particular embodiment which weighed only 320 gm, the total heat output was on the order of 60,000 to 65,000 calories and was delivered in a minute or so. Thus, a relatively large amount of liquid can be heated up very fast. For example, 1000 cc of water can be raised by as much as 65°C. The contents of a standard full canteen, which is on the order of 800 cc can be raised by about 75°C, e.g. from 15°C to 90°C. Since the water can be raised to nearly the boiling point, in order to prevent the canteen from bursting due to the build-up of vapor pressure in the canteen, the holes 19, previously described, are provided in the canteen cap 16. In practice, prior to using the device 10, the cap 16 is slightly loosened, thus opening the holes. Consequently as gas or vapor pressure starts to build up in the canteen 15, the holes provide a path for the gases to excape and thereby avoid canteen-bursting pressure from building up in the canteen.

The device is of the disposable type, in that once used it can't be refilled with new matter since due to their reactions they harden in the housing, which has to be discarded. However, a new device can be easily and speedily attached to the cap 16 through its opening 31. Since the device produces such a relatively large amount of heat speedily and, more particularly without producing smoke, flames or flashes and is noiseless - it has many applications. Some of those, such as use by soldiers in front lines or in prolonged ambush positions in a cold climate, or by hikers in remote locations, whereat smokeless and/or flashless heat production is highly advantageous. The device can also be used by frogmen or people generally exposed to wet or water soaked conditions, e.g. fishermen or divers. Other examples of usage are in field hospitals, rescue operations and the like.

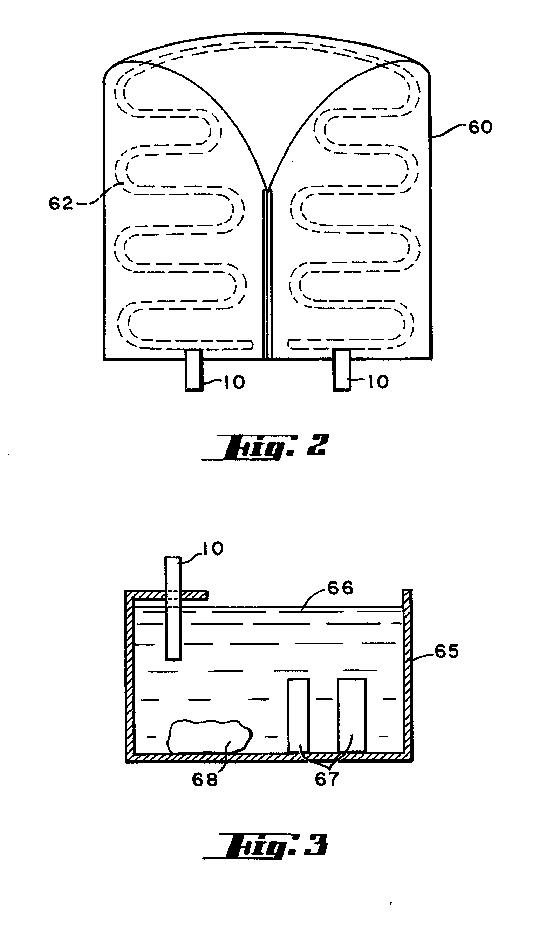

It should be clear that the use of the device is not limited for use with a water canteen only. If desired it can be used to heat an appropriate liquid, contained in liquid conduits in an article of clothing or the like. For example, as shown in Fig. 2, a skindiver or wet suit 60 may be designed to contain water in a water-tight layer or long tube 62. The device can then be used to heat up the water when desired, even in underwater conditions. More than one device may be attached to the suit. This would enable the diver to maintain the suit temperature above an uncomfortable or dangerous low temperature for a prolonged time period by successively activating the devices.

If desired the device may be attached to a water container such as a large pot 65 (see Fig. 3) to heat up liquid, e.g. soup for direct consumption and/or water 66 to in turn heat up food in cans 67 or plastic bags 68, for use by several people.

- 10 -

As to the amount of heat produced and the heating rate, both of these factors can be controlled, by the choice and amounts of materials 40 and 42-44. The device can also be thought of as a heat probe with a controlled heating rate.

Another very important application of the present invention is to heat up the liquid in a car radiator. As is known in cold climates starting up a car or truck is not always easy. This is due to the fact that the engine block and the liquid in the radiator are cold. Typically one idles the engine for a while until the block and the circulating liquid heat up somewhat. In accordance with the present invention the housing 25 may be threadably coupled to an appropriate special threaded hole in the radiator. Whenever necessary or desirable the device may be activated and thus heat up the liquid in the radiator, without having to turn the engine on. Since the device produces heat without flame, smoke or the like its use in a car is totally safe. If desired the device may be inserted in the liquid path in the engine block itself, thus raise the engine temperature to a sufficiently high temperature even before the engine is turned on.

Although particular embodiments of the invention have been described and illustrated herein, it is recognized that modifications and variations may readily occur to those skilled in the art and consequently, it is intended that the claims be interpreted to cover such modifications and equivalents.

CLAIMS

1. A heating device for producing heat substantially without noise, flame, gas or smoke, comprising:

a substantially sealed housing having an outer surface and containing therein a preselected quantity of a first matter means which is characterised by releasing heat when undergoing a reaction as a result of being heated, for heating said housing, whereby fluid which is in a container and which is in contact with the outer surface of the housing is heated by the heat released by said first matter means;

a preselected quantity of second matter means in said housing substantially in contact with said first matter means for heating the latter upon being activated;

primer means partially extending into said housing and partially extending out of said housing, the external portion including manually actuating means for actuating said primer means to activate said second matter means; and

means for attaching said housing to the fluid container.

2. A heating device according to Claim 1 characterized in that said first matter means comprises a mixture of at least two compositions initially in compacted powder form which are characterized by pyrotechnic properties, whereby when the mixture is heated it undergoes a smokeless substantially gasless reaction, accompanied by release of heat.

0130757

- 12 -

3. A heating device according to Claim 2 characterized in that the compositions are $CaSi_2$ and $Fe_2O_3$ and the mixture quantity being sufficient to heat said fluid through said housing with several tens of thousands of calories.

4. A heating device according to any one of Claims 1 to 3 characterized in that said second matter means includes at least a first layer of a mixture of Zr or Ni and a second layer of a mixture of B and $BaCrO_4$, said second layer being adjacent said primer means in said housing, whereby when the primer means is manually activated from the housing exterior, said primer means actuates said second layer to undergo a reaction to heat said first layer which as a result of the reaction thereof heats the mixture forming said first matter means.

5. A heating device according to any one of Claims 1 to 4 characterized in that the fluid container is a water canteen and includes a canteen cap with said housing being frictionally connected to said cap through a hole in the top thereof.

6. A heating device according to Claim 5 characterized in that the canteen cap defines a plurality of holes which are sealable by an upper rim of the canteen when the cap is tightened thereto and which provide a path for gases from the canteen to the cap's exterior when the top of the latter is displaced from the canteen upper rim.

7. A heating device according to any one of Claims 1 to 6 characterized in that the fluid container is of the type adapted to contain foodstuff.

8.      A heating device according to any one of Claims 6 or 7 characterized in that the fluid container is of the type adapted to contain foodstuff.

9.      A heating device according to Claim 8 characterized in that the fluid is water and said container is further adapted to contain foodstuff in water-proof packages which are heatable by the water which is in turn heatable by the heat from the device.

10.      A heating device according to any one of Claims 1 to 6 characterized in that the container is of the type containing liquid for engine cooling in a moving vehicle.

Fig. 1

**Fig. 2**

**Fig. 3**